# EUROPEAN PATENT SPECIFICATION

(11) **EP 2 626 813 B1**
(45) Date of publication and mention of the grant of the patent: **15.11.2017**
(21) Application number: 13154789.5
(22) Date of filing: 11.02.2013
(51) Int. Cl.: G06K 9/00

(54) **Apparatus and method for guiding handwriting input for handwriting recognition**
Vorrichtung und Verfahren zur Führung der Handschrift-Eingabe für die Handschrifterkennung
Appareil et procédé pour le guidage d'entrée d'écriture pour la réconnaissance de l'écriture manuscrite

(30) Priority: 09.02.2012 KR 20120013169
(43) Date of publication of application: 14.08.2013
(73) Proprietor: Samsung Electronics Co., Ltd., Gyeonggi-do 443-742 (KR)
(72) Inventor: Kim, Jung-Rim, 443-742 Gyeonggi-do (KR); Kang, Woo-Sung, 443-742 Gyeonggi-do (KR); Kim, Sang-Ho, 443-742 Gyeonggi-do (KR)
(74) Representative: Grünecker Patent- und Rechtsanwälte PartG mbB

(56) References cited:
- US-A- 5 864 636
- US-A- 5 926 566
- US-B1- 8 050 500
- TAPPERT C C ET AL: "THE STATE OF THE ART IN ON-LINE HANDWRITING RECOGNITION", IEEE TRANSACTIONS ON PATTERN ANALYSIS AND MACHINE INTELLIGENCE, IEEE COMPUTER SOCIETY, USA, vol. 12, no. 8, 1 August 1990 (1990-08-01) , pages 787-808, XP000541894, ISSN: 0162-8828, DOI: 10.1109/34.57669

## Description

### BACKGROUND OF THE INVENTION

### 1. Field of the Invention

The present invention relates generally to an apparatus and method for guiding handwriting input, and more particularly, to an apparatus and method for guiding handwriting input based on a trajectory drawn by user's handwriting input.

### 2. Description of the Related Art

Generally, handwriting recognition is used to recognize handwriting input via a pointing device such as a touch screen or a digitizer.

More specifically, conventional handwriting recognition recognizes the order of a trajectory drawn through a touch-and-drag input by sensing a contact or a pressure of an object, such as a user's finger or a pen, through a touch screen. For example, a coordinate string may be calculated according to the order of an input trajectory by using an 8-way chain code, and the calculated coordinate string is patterned, such that the modeled pattern is compared with a preset handwriting recognition engine. The most similar pattern found as a result of comparison is displayed as a recognition result.

In other words, conventional handwriting recognition determines the coordinate string according to the input order and the input trajectory based on touch-and-drag inputted by a user.

As such, conventionally, the handwriting order and handwriting input direction of the user are patterned together, and the patterned data is compared with a preset handwriting recognition pattern, such that the most matched pattern is displayed as a recognition result.

However, since an input order based on the user's touch input is recorded, if handwriting input is made with a wrong input order (i.e. a different order of input resulting in a similar input shape), a recognition engine fails to recognize the input handwriting, resulting in a low recognition rate.

As a result, in various instances where a user may input handwriting in a wrong order, such as when a user has to input a foreign character, but does not know the conventional order of making strokes of the character, handwriting input by the user is difficult to recognize with conventional handwriting recognition.

US patent US 8 050 500 B1 teaches an automated recognition of user input through hand writing, wherein the spatial temporal inputs are separated into discrete input strokes, the input strokes are compared to a database of model character stroke sequences, and a plurality of candidate character sequences are determined.

US patent US 5 926 566 A discloses a method for incremental recognition of ideographic hand writing, such as Chinese characters, wherein an incremental character recognizer produces a hypothesis list of at least one candidate character based on at least one stroke of an ideographic character from a coordinate entry tablet. The hypothesis list of candidate characters containing the at least one stroke is then displayed in a separate area of the screen, from which the user may select a correct character. If the user continues entering additional strokes, the incremental character recognizer produces an updated hypothesis list, which is displayed in the display region.

### SUMMARY OF THE INVENTION

Accordingly, the present invention provides an apparatus and method for guiding handwriting input to a user based on a trajectory drawn by user's handwriting input.

The present invention is defined by the appended claims. Preferred embodiments are subject of the dependent claims.

### BRIEF DESCRIPTION OF THE DRAWINGS

The above and other features and advantages of embodiments of the present invention will be more apparent from the following detailed description taken in conjunction with the accompanying drawings, in which:
FIG. 1 is a block diagram illustrating a handwriting input guiding apparatus including a touch screen according to an embodiment of the present invention;
FIG 2 is a flowchart illustrating a process of storing character feature information, which is used to guide handwriting input, and optical character information in a correspondence manner according to an embodiment of the present invention;
FIG. 3 is a flowchart illustrating a process of guiding handwriting input according to an embodiment of the present invention;
FIG. 4 is a flowchart illustrating a process of guiding handwriting input when user's handwriting is additionally input according to an embodiment of the present invention; and
FIG. 5 is a diagram illustrating a screen for guiding handwriting input in response to user's handwriting input according to an embodiment of the present invention.

### DETAILED DESCRIPTION OF THE EMBODIMENTS OF THE PRESENT INVENTION

Hereinafter, embodiments of the present invention are described in detail with reference to the accompanying drawings. In addition, a detailed description of well-known functions and constructions may be omitted if such a description obscures the subject matter of the present invention.

An apparatus performing a method according to an embodiment of the present invention extracts at least one character feature information item from at least one optical character and stores the extracted at least one character feature information item and each optical character in a correspondence manner, and detects first feature information from a trajectory drawn by handwriting input. The apparatus then compares the detected first feature information with previously stored character feature information, detects at least one optical character having the same character feature information as the first feature information, and displays the detected optical characters in an overlapping manner based on the position of the drawn trajectory, thereby guiding handwriting input regardless of the order of handwriting input of a user.

In the following description, an optical character refers to, but not limited to, a character converted by scanning an image of a character, which is written by a person or printed by a machine, with an image scanner to allow a machine to read that character. A character according to the present invention may be an arbitrary digital character to be compared with a character handwritten by a user or a portion of the character in character recognition.

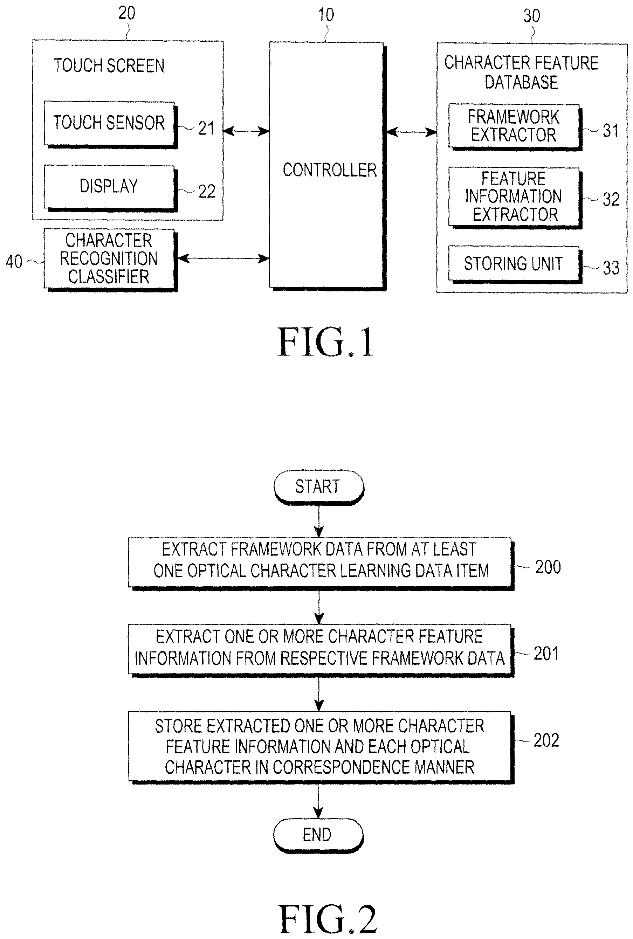

FIG. 1 is a block diagram of a handwriting input guiding apparatus including a touch screen according to an embodiment of the present invention.

Referring to FIG. 1, the handwriting input guiding apparatus includes a controller 10, a touch screen 20, a character feature database 30, and a character recognition classifier 40.

The controller 10 controls overall operations of the handwriting input guiding apparatus, and in particular, extracts at least one character feature information item from at least one optical character and stores the extracted at least one character feature information item and each optical character in a correspondence manner through the character feature database 30.

More specifically, the controller 10 extracts framework data from at least one optical character learning data item stored in a storing unit 33 through a frame extractor 31 of the character feature database 30. Herein, framework data refers to data that expresses the optical character learning data as a maximally compressed skeleton line.

The controller 10 extracts at least one character feature information item from the respective extracted framework data through a feature information extractor 32, and stores the extracted at least one character feature information item and each optical character in a correspondence manner in the storing unit 33. The character feature information includes information such as length rate, angle, direction, and relative position of the framework data. For example, in the present example according to an embodiment of the present invention, for an optical character '1' character feature information includes angle information, including 180° and 90°, based on respective strokes and direction information including horizontal and vertical directions of the respective strokes.

In response to a request for executing a handwriting input mode, the controller 10 executes the handwriting input mode for performing recognition corresponding to handwriting input. The handwriting input mode includes an operation mode for guiding handwriting input according to user's handwriting input.

Upon input of a first touch-and-drag or a first touch-and-drag-and-drop through the touch screen 20, the controller 10 detects first feature information from a trajectory drawn according to the first touch-and-drag input or the first touch-and-drag-and-drop input. The first feature information includes information such as length, ratio, angle, direction, and relative position of the drawn trajectory.

The controller 10 compares the detected first feature information with at least one character feature information item stored in the character feature database 30 to detect at least one first optical character candidate having the same character feature information as the detected first feature information. For example, if a drawn trajectory is '-', the controller 10 detects angle information such as 180° and direction information such as the horizontal direction, and detects first optical character candidates having the horizontal direction as character feature information. The detected optical character candidate may include " 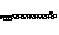 ", " 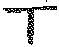 ", " 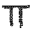 ", " 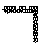 ", " 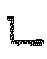 ", " 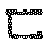 ", etc.

The controller 10 displays the detected at least one first optical character candidate in an overlapping manner based on the position of the drawn trajectory through a display 22 of the touch screen 20.

Upon receiving input of a second touch-and-drag or a second touch-and-drag-and-drop through the touch screen 20, the controller 10 detects second feature information from a trajectory drawn according to the second touch-and-drag input or the second touch-and-drag-and-drop input. For example, if a drawn trajectory is a diagonal trajectory, such as a "/', the controller 10 may further detect angle information of the angle of the trajectory, such as 45°.

The controller 10 detects at least one second optical character candidate having the same character feature information as the second feature information from among the displayed first optical character candidates. According to an illustrative example not being part of the present invention, the controller 10 compares the detected second feature information with previously stored at least one character feature information item to detect at least one second optical character candidate having both the detected first feature information and the same character feature information as the second feature information.

The controller 10 displays, from among the at least one first optical character candidate, only a first optical character candidate that is matched to the detected second optical character candidates.

The controller 10 displays optical character candidates that can be classified by the character recognition classifier 40, from among the displayed at least one optical character candidate, on a predetermined display region to allow the user to select a character to be input.

The touch screen 20 includes a touch sensor 21 and the display 22, and the touch sensor 21 senses user's touch input, generates a sensing signal, and transmits the sensing signal to the controller 10. The touch sensor 21 may be any of a variety of types of touch sensors, including, but not limited to, a capacitive overlay type, a resistive overlay type, an infrared beam type, a pressure sensor, etc. The touch sensor 21 may be any type of a sensor capable of sensing contact or pressure of an object.

The display 22, which may be implemented with a Liquid Crystal Display (LCD), visually provides menus, input data, function setting information and other various information of a portable terminal to the user. For example, the display 22 may output a booting screen, a standby screen, a display screen, a call screen, and other application execution screens of a portable terminal.

The character feature database 30 includes the framework extractor 31, the feature information extractor 32, and the storing unit 33. The framework extractor 31 extracts framework data from at least one optical character learning data item stored in the storing unit 33. The feature information extractor 32 extracts at least one character feature information item from respective framework data. The storing unit 33 stores the extracted at least one character feature information item and each optical character in a correspondence manner.

The character recognition classifier 40 determines which character candidates can be classified from among the at least one optical character displayed in an overlapping manner. For example, when a displayed optical character candidate is " 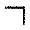 ", the character recognition classifier 40 may determine character candidates " 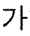 ", " 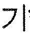 ", " 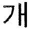 ", " 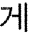 ", etc.

FIG. 2 is a flowchart illustrating a process of storing character feature information that is used to guide handwriting input, and an optical character in a correspondence manner according to an embodiment of the present invention.

Referring to FIG. 2, in step 200, the controller 10 extracts framework data from at least one optical character learning data item stored in the storing unit 33 through the framework extractor 31 of the character feature database 30.

In step 201, the controller 10 extracts at least one character feature information item from the extracted respective framework data through the feature information extractor 32.

In step 202, the controller 10 stores the extracted at least one character feature information item and each optical character in a correspondence manner in the storing unit 33. The character feature information includes information such as length rate, angle, direction, and relative position of framework data.

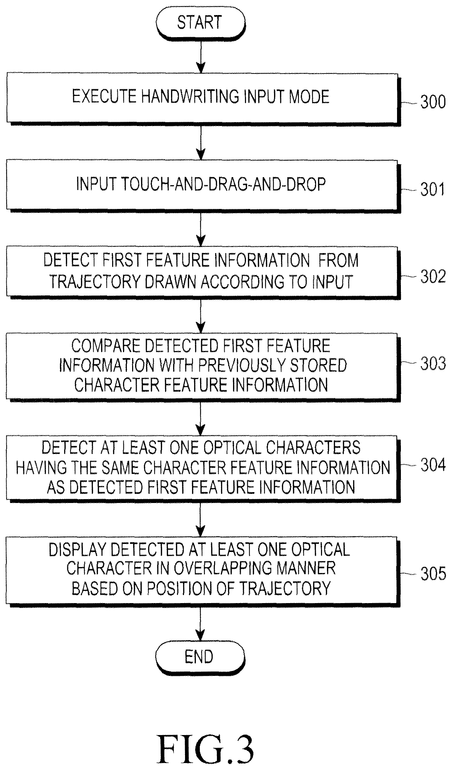

FIG. 3 is a flowchart illustrating a process of guiding handwriting input according to an embodiment of the present invention.

Referring to FIG. 3, in step 300, in response to a request for executing a handwriting input mode, the controller 10 executes the handwriting input mode for performing recognition corresponding to handwriting input. The handwriting input mode includes an operation mode for guiding handwriting input according to user's handwriting input.

Upon input of a first touch-and-drag or a first touch-and-drag-and-drop through the touch screen 20 in step 301, the controller 10 detects first feature information from a trajectory drawn according to the first touch-and-drag input or the first touch-and-drag-and-drop input, in step 302. The first feature information includes information such as length, ratio, angle, direction, and relative position of the drawn trajectory.

In step 303, the controller 10 compares the detected first feature information with at least one character feature information item stored in the character feature database 30.

In step 304, the controller 10 detects at least one optical character candidate having the same character feature information as the detected first feature information.

In step 305, the controller 10 displays the detected at least one optical character candidate in an overlapping manner based on the position of the drawn trajectory on the display 22 of the touch screen 20.

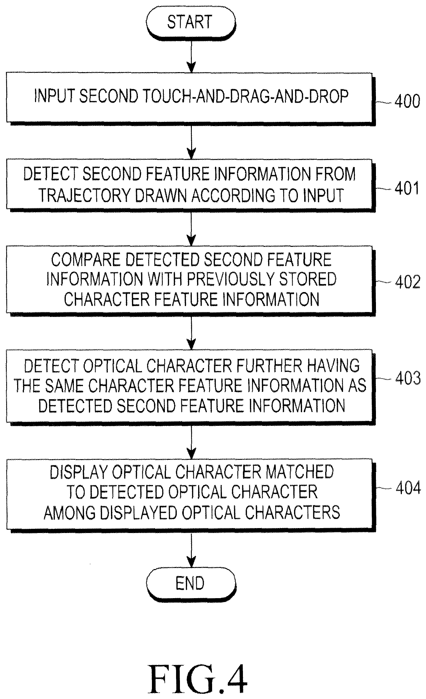

FIG. 4 is a flowchart illustrating a process of guiding handwriting input when a user's handwriting is additionally input, according to an embodiment of the present invention.

Referring to FIG. 4, in step 400, upon input of a second touch-and-drag or a second touch-and-drag-and-drop through the touch screen 20, the controller 10 detects second feature information from a trajectory drawn according to the second touch-and-drag input or the second touch-and-drag-and-drop input. For example, if a drawn trajectory is "/", the controller 10 may further detect angle information of a corresponding angle, such as 45°.

In step 402, the controller 10 compares the detected second feature information with previously stored at least one character feature information item.

In step 403, the controller 10 detects at least one optical character candidate further having the same character feature information as the detected second feature information. More specifically, the controller 10 detects at least one optical character candidate having both the first feature information and the second feature information.

In step 404, the controller 10 displays only an optical character candidate that is matched to the detected optical character candidates from among the displayed at least one optical character candidate.

The controller 10 displays, from among the displayed at least one optical character candidate, optical character candidates that can be classified by the character recognition classifier 40 on a predetermined display region.

As such, according to an embodiment the present invention, feature information of a trajectory generated by user's touch input is compared to predetermined character feature information, and at least one character candidate having the same character feature information is displayed as the predetermined character feature information, allowing the user to easily perform handwriting input regardless of the order of making strokes.

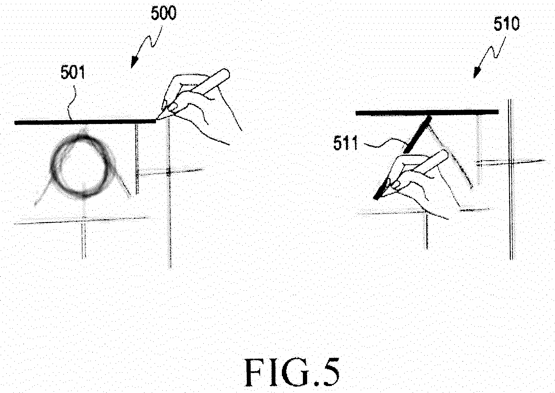

FIG. 5 is a diagram illustrating a screen for guiding handwriting input in response to user's handwriting input according to an embodiment of the present invention.

Referring to FIG. 5, upon receiving input of a handwriting stroke 501 as

shown in a first screen 500, the controller 10 extracts first feature information from a trajectory drawn according to the handwriting stroke 501 (i.e., a first touch-and-drag input), compares the extracted first feature information with previously stored character feature information, and displays optical character candidates having the same character feature information as the extracted first feature information in an overlapping manner.

Upon receiving further input of a handwriting stroke 511 as shown in second screen 510, the controller 10 extracts second feature information from a trajectory drawn according to the second handwriting stroke 511 (i.e., a second touch-and-drag input), and displays optical character candidates further having the same character feature information as the extracted second feature information in an overlapping manner.

As is apparent from the foregoing description, feature information of a trajectory generated by user's touch input is compared with predetermined character feature information, and at least one character candidate having the same character feature information as the predetermined character feature information are displayed, thus allowing a user to easily perform handwriting input regardless of the order of inputting strokes.

Moreover, embodiments of the present invention can clearly recognize handwriting even when the user performs handwriting input regardless of the order of making strokes.

## Claims

1. An apparatus for guiding handwriting input for handwriting recognition, the apparatus comprising:
a touch screen (20) for displaying a screen and receiving a touch input;
a storing unit (33); and
a controller (10) configured to:
extract at least one character feature information from at least one optical character,
store the extracted at least one character feature information and each optical character in a correspondence manner in the storing unit (33),
display a first handwritten stroke inputted by the user through the touch screen (20),
detect first character feature information from the first handwritten stroke,
determine a plurality of first optical character candidates from among the stored at least one optical character which have the same character feature information as the detected first character feature information,
display the plurality of first optical character candidates through the touch screen, wherein the plurality of first optical character candidates are superimposed such that each of the plurality of first optical character candidates has the first handwritten stroke as part of its optical character;
upon receiving input of a second handwritten stroke through the touch screen (20), display the input second handwritten stroke,
detect second character feature information from the second handwritten stroke,
determine a plurality of second optical character candidates from among the displayed plurality of first optical character candidates which have the same character feature information as the detected second character feature information, and
control the touch screen (20) to display the plurality of second optical character candidates,
wherein the plurality of second optical character candidates are superimposed such that each of the plurality of second optical character candidates has the first and the second handwritten strokes as part of its optical character.

2. The apparatus of claim 1, wherein the controller (10) is configured to:
detect, upon receiving input of a first touch through the touch screen, the first character feature information from a trajectory drawn according to the input first touch, compare the detected first character feature information with the stored character feature information, detect the plurality of first optical character candidates having same character feature information as the detected first character feature information, and control the touch screen (20) to display the plurality of first optical character candidates through the touch screen (20) in an overlapping manner based on a position of the trajectory.

3. The apparatus of claim 2, wherein the character feature information includes at least one of length rate information, angle information, direction information, and relative position information of each stroke of the at least one optical character.

4. A method for guiding handwriting input for handwriting recognition, the method comprising:
extracting at least one character feature information from at least one optical character,
storing the extracted at least one character feature information and each optical character in a correspondence manner in the storing unit (33),
displaying a first handwritten stroke inputted by the user through a touch screen (20);
detecting first character feature information from the first handwritten stroke;
determining a plurality of first optical character candidates from among the stored at least one optical character which have the same character feature information as the detected first character feature information,
displaying the plurality of first optical character candidates through the touch screen (20), wherein the plurality of first optical character candidates are superimposed such that each of the plurality of first optical character candidates has the first handwritten stroke as part of its optical character;
upon receiving input of a second handwritten stroke through the touch screen (20), displaying the input second handwritten stroke;
detecting second character feature information from the second handwritten stroke;
determining a plurality of second optical character candidates from among the displayed plurality of first optical character candidates which have the same character feature information as the detected second character feature information; and
displaying, on the touch screen (20), the plurality of second optical character candidates,
wherein the plurality of second optical character candidates are superimposed such that each of the plurality of second optical character candidates has the first and the second handwritten strokes as part of its optical character.

5. The method of claim 4, further comprising:
detecting (302), upon receiving input (301) of a first touch, the first character feature information from a trajectory drawn according to the input first touch;
comparing (303) the detected first character feature information with the stored character feature information;
detecting (304) the plurality of first optical character candidates having same character feature information as the detected first character feature information; and
displaying (305) the plurality of first optical character candidates in an overlapping manner based on a position of the trajectory.

6. The method of claim 5, wherein the character feature information includes at least one of length rate information, angle information, direction information, and relative position information of each stroke of the at least one optical character.

## Patentansprüche

1. Vorrichtung zur Anleitung bei Handschrifteneingabe zur Handschriftenerkennung, wobei die Vorrichtung umfasst:
einen berührungsempfindlichen Bildschirm (20) zur Anzeige eines Bildschirms und zum Empfang einer Berührungseingabe;
eine Speichereinheit (33); und
eine Steuerung (10), die ausgebildet ist, um:
mindestens eine Zeicheneigenschaftsinformation aus mindestens einem optischen Zeichen zu extrahieren, die extrahierte mindestens eine Zeicheneigenschaftinformation und jedes optische Zeichen in einer einander zugeordneten Weise in der Speichereinheit (33) zu speichern,
einen ersten handgeschriebenen Strich, der von dem Benutzer über den berührungsempfindlichen Bildschirm (20) eingegeben wird, anzuzeigen,
eine Zeicheneigenschaftsinformation aus dem ersten handgeschriebenen Strich zu erfassen,
mehrere erste mögliche optische Zeichen aus dem gespeicherten mindestens einen optischen Zeichen zu ermitteln, die die gleiche Zeicheneigenschaftinformation wie die erfasste erste Zeicheneigenschaftsinformation haben,
die mehreren ersten möglichen optischen Zeichen durch den berührungsempfindlichen Bildschirm anzuzeigen, wobei die mehreren möglichen ersten optischen Zeichen so überlagert sind, dass jedes der mehreren möglichen ersten optischen Zeichen den ersten handgeschriebenen Strich als Teil seines optischen Zeichens aufweist;
bei Empfang einer Eingabe eines zweiten handgeschriebenen Strichs über den berührungsempfindlichen Bildschirm (20) den eingegebenen zweiten handgeschriebenen Strich anzuzeigen,
eine zweite Zeicheneigenschaftsinformation aus dem zweiten handgeschriebenen Strich zu erfassen,
mehrere mögliche zweite optische Zeichen, die die gleiche Zeicheneigenschaftsinformation wie die erfasste zweite Zeicheneigenschaftsinformation haben, aus den angezeigten mehreren möglichen ersten optischen Zeichen zu ermitteln, und
den berührungsempfindlichen Bildschirm (20) zu steuern, um die mehreren möglichen zweiten optischen Zeichen anzuzeigen, wobei die mehreren möglichen zweiten optischen Zeichen so überlagert sind, dass jedes der mehreren möglichen zweiten optischen Zeichen den ersten und den zweiten handgeschriebenen Strich als Teil seines optischen Zeichens aufweist.

2. Vorrichtung nach Anspruch 1, wobei die Steuerung (10) ausgebildet ist, um:
bei Empfang einer Eingabe einer ersten Berührung über den berührungsempfindlichen Bildschirm die erste Zeicheneigenschaftsinformation aus einer Bahn zu erfassen, die gemäß der eingegebenen ersten Berührung gezeichnet ist, die erfasste erste Zeicheneigenschaftsinformation mit der gespeicherten Zeicheneigenschaftsinformation zu vergleichen, die mehreren möglichen ersten optischen Zeichen mit der gleichen Zeicheneigenschaftsinformation wie die erfasste erste Zeicheneigenschaftsinformation zu erfassen und den berührungsempfindlichen Bildschirm (20) zu steuern, die mehreren möglichen ersten optischen Zeichen mittels des berührungsempfindlichen Bildschirms (20) auf der Grundlage einer Lage der Bahn in überlappender Weise anzuzeigen.

3. Vorrichtung nach Anspruch 2, wobei die Zeicheneigenschaftsinformation eine Längsgeschwindigkeitsinformation und/oder eine Winkelinformation und/oder eine Richtungsinformation und/oder eine Information zur relativen Lage jedes Strichs des mindestens einen optischen Zeichens enthält.

4. Verfahren zur Anleitung bei Handschrifteneingabe zur Handschriftenerkennung, wobei das Verfahren umfasst:
Extrahieren mindestens einer Zeicheneigenschaftsinformation aus mindestens einem optischen Zeichen,
Speichern der extrahierten mindestens einen Zeicheneigenschaftsinformation und jedes optischen Zeichens in einander zugeordneter Weise in einer Speichereinheit (33),
Anzeigen eines ersten handgeschriebenen Strichs, der von einem Benutzer über einen berührungsempfindlichen Bildschirm (20) eingegeben wird;
Erfassen einer ersten Zeicheneigenschaftsinformation aus dem ersten handgeschriebenen Strich;
Ermitteln mehrerer möglicher optischer Zeichen aus dem gespeicherten mindestens einen optischen Zeichen, die die gleiche Zeicheneigenschaftsinformation wie die erfasste erste Zeicheneigenschaftsinformation haben,
Anzeigen der mehreren möglichen ersten optischen Zeichen über den berührungsempfindlichen Bildschirm (20), wobei die mehreren möglichen ersten optischen Zeichen so überlagert werden, dass jedes der mehreren möglichen ersten optischen Zeichen den ersten handgeschriebenen Strich als Teil seines optischen Zeichens aufweist;
bei Empfang einer Eingabe eines zweiten handgeschriebenen Strichs über den berührungsempfindlichen Bildschirm (20), Anzeigen des eingegebenen zweiten handgeschriebenen Strichs;
Erfassen einer zweiten Zeicheneigenschaftsinformation aus dem zweiten handgeschriebenen Strich;
Ermitteln mehrerer möglicher zweiter optischer Zeichen, die die gleiche Zeicheneigenschaftsinformation wie die erfasste zweite Zeicheneigenschaftsinformation haben, aus den angezeigten mehreren möglichen ersten optischen Zeichen; und
Anzeigen der mehreren möglichen zweiten optischen Zeichen auf dem berührungsempfindlichen Bildschirm (20),
wobei die mehreren möglichen zweiten optischen Zeichen so überlagert werden, dass jedes der mehreren möglichen zweiten optischen Zeichen den ersten und den zweiten handgeschriebenen Strich als Teil seines optischen Zeichens aufweist.

5. Verfahren nach Anspruch 4, das ferner umfasst:
Erfassen (302), bei Empfang der Eingabe (301) einer ersten Berührung, der ersten Zeicheneigenschaftsinformation aus einer Bahn, die entsprechend der eingegebenen ersten Berührung gezeichnet wird;
Vergleichen (303) der erfassten ersten Zeicheneigenschaftsinformation mit der gespeicherten Zeicheneigenschaftsinformation;
Erfassen (304) der mehreren möglichen ersten optischen Zeichen, die die gleiche Zeicheneigenschaftsinformation wie die erfasste erste Zeicheneigenschaftsinformation haben; und
Anzeigen (305) der mehreren möglichen ersten optischen Zeichen in überlappender Weise auf der Grundlage einer Lage der Bahn.

6. Verfahren nach Anspruch 5, wobei die Zeicheneigenschaftsinformation eine Längsgeschwindigkeitsinformation und/oder eine Winkelinformation und/oder eine Richtungsinformation und/oder eine Information zur relativen Lage jedes Strichs des mindestens einen optischen Zeichens enthält.

## Revendications

1. Appareil de guidage d'entrée d'écriture manuscrite pour la reconnaissance d'écriture manuscrite, l'appareil comprenant :
un écran tactile (20) pour afficher un écran et recevoir une entrée tactile ;
une unité de stockage (33) ; et
un contrôleur (10) configuré pour :
extraire au moins une information de caractéristique de caractère à partir d'au moins un caractère optique,
stocker ladite au moins une information de caractéristique de caractère extraite et chaque caractère optique selon une correspondance dans l'unité de stockage (33),
afficher un premier tracé manuscrit entré par l'utilisateur par l'intermédiaire de l'écran tactile (20),
détecter une information de caractéristique de premier caractère à partir du premier tracé manuscrit,
déterminer une pluralité de candidats de premier caractère optique à partir des au moins un caractère optique stockés qui ont la même information de caractéristique de caractère que l'information de caractéristique de premier caractère détectée,
afficher la pluralité de candidats de premier caractère optique par l'intermédiaire de l'écran tactile, la pluralité de candidats de premier caractère optique étant superposés de telle sorte que chacun de la pluralité de candidats de premier caractère optique a le premier tracé manuscrit en tant que partie de son caractère optique ;
lors de la réception d'une entrée d'un deuxième tracé manuscrit par l'intermédiaire de l'écran tactile (20), afficher le deuxième tracé manuscrit entré,
détecter une information de caractéristique de deuxième caractère à partir du deuxième tracé manuscrit,
déterminer une pluralité de candidats de deuxième caractère optique à partir de la pluralité de candidats de premier caractère optique affichés qui ont la même information de caractéristique de caractère que l'information de caractéristique de deuxième caractère détectée, et
contrôler l'écran tactile (20) pour afficher la pluralité de candidats de deuxième caractère optique,
la pluralité de candidats de deuxième caractère optique étant superposée de telle sorte que chacun de la pluralité de candidats de deuxième caractère optique a les premier et deuxième tracés manuscrits en tant que partie de son caractère optique.

2. Appareil selon la revendication 1, dans lequel le contrôleur (10) est configuré pour :
détecter, lors de la réception d'une entrée d'un premier toucher par l'intermédiaire de l'écran tactile, l'information de caractéristique de premier caractère à partir d'une trajectoire dessinée en fonction du premier toucher entré, comparer l'information de caractéristique de premier caractère détectée avec l'information de caractéristique de caractère stockée, détecter la pluralité de candidats de premier caractère optique ayant la même information de caractéristique de caractère que l'information de caractéristique de premier caractère détectée, et contrôler l'écran tactile (20) pour afficher la pluralité de candidats de premier caractère optique par l'intermédiaire de l'écran tactile (20) d'une manière chevauchante en fonction d'une position de la trajectoire.

3. Appareil selon la revendication 2, l'information de caractéristique de caractère incluant au moins l'une parmi une information de taux de longueur, une information d'angle, une information de direction, et une information de position relative de chaque tracé dudit au moins un caractère optique.

4. Procédé de guidage d'entrée d'écriture manuscrite pour la reconnaissance d'écriture manuscrite, le procédé comprenant :
extraire au moins une information de caractéristique de caractère à partir d'au moins un caractère optique,
stocker ladite au moins une information de caractéristique de caractère extraite et chaque caractère optique selon une correspondance dans l'unité de stockage (33),
afficher un premier tracé manuscrit entré par l'utilisateur par l'intermédiaire d'un écran tactile (20) ;
détecter une information de caractéristique de premier caractère à partir du premier tracé manuscrit ;
déterminer une pluralité de candidats de premier caractère optique à partir des au moins un caractère optique stockés qui ont la même information de caractéristique de caractère que l'information de caractéristique de premier caractère détectée,
afficher la pluralité de candidats de premier caractère optique par l'intermédiaire de l'écran tactile (20), la pluralité de candidats de premier caractère optique étant superposée de telle sorte que chacun de la pluralité de candidats de premier caractère optique a le premier tracé manuscrit en tant que partie de son caractère optique ;
lors de la réception d'une entrée d'un deuxième tracé manuscrit par l'intermédiaire de l'écran tactile (20), afficher le deuxième tracé manuscrit entré ;
détecter une information de caractéristique de deuxième caractère à partir du deuxième tracé manuscrit ;
déterminer une pluralité de candidats de deuxième caractère optique à partir de la pluralité de candidats de premier caractère optique affichés qui ont la même information de caractéristique de caractère que l'information de caractéristique de deuxième caractère détectée ; et
afficher, sur l'écran tactile (20), la pluralité de candidats de deuxième caractère optique,
la pluralité de candidats de deuxième caractère optique étant superposée de telle sorte que chacun de la pluralité de candidats de deuxième caractère optique a les premier et deuxième tracés manuscrits en tant que partie de son caractère optique.

5. Procédé selon la revendication 4, comprenant en outre :
détecter (302), lors de la réception d'une entrée (301) d'un premier toucher, l'information de caractéristique de premier caractère à partir d'une trajectoire dessinée en fonction du premier toucher entré ;
comparer (303) l'information de caractéristique de premier caractère détectée avec l'information de caractéristique de caractère stockée ;
détecter (304) la pluralité de candidats de premier caractère optique ayant la même information de caractéristique de caractère que l'information de caractéristique de premier caractère détectée ; et
afficher (305) la pluralité de candidats de premier caractère optique d'une manière chevauchante en fonction d'une position de la trajectoire.

6. Procédé selon la revendication 5, l'information de caractéristique de caractère incluant au moins l'une parmi une information de taux de longueur, une information d'angle, une information de direction, et une information de position relative de chaque tracé dudit au moins un caractère optique.
